**Europäisches Patentamt**

**European Patent Office**

**Office européen des brevets**

(11) Numéro de publication : **0 385 831 B1**

# (12) FASCICULE DE BREVET EUROPEEN

(45) Date de publication du fascicule du brevet :
08.07.92 Bulletin 92/28

(51) Int. Cl.⁵ : **B64C 25/10**

(21) Numéro de dépôt : **90400460.3**

(22) Date de dépôt : **20.02.90**

(54) **Atterrisseur d'avion à roues orientables lors du relevage de l'atterrisseur.**

(30) Priorité : **28.02.89 FR 8902566**

(43) Date de publication de la demande :
**05.09.90 Bulletin 90/36**

(45) Mention de la délivrance du brevet :
**08.07.92 Bulletin 92/28**

(84) Etats contractants désignés :
**DE GB IT**

(56) Documents cités :
**US-A- 3 086 733**
**US-A- 4 556 179**

(73) Titulaire : **MESSIER BUGATTI**
**Zone aéronautique Louis Bréguet B.P. 40**
**F-78140 Velizy Villacoublay (FR)**

(72) Inventeur : **Derrien, Michel**
**16 rue du Parc de Clagny**
**F-78000 Versailles (FR)**

(74) Mandataire : **Fruchard, Guy et al**
**CABINET BOETTCHER 23, rue la Boétie**
**F-75008 Paris (FR)**

## Description

La présente invention concerne un atterrisseur d'avion relevable.

On sait que pour optimiser la forme du logement de l'atterrisseur d'un avion il est parfois nécessaire de prévoir une rotation de la partie inférieure de l'atterrisseur par rapport à sa partie supérieure pendant le relevage de l'atterrisseur. Cette fonction est généralement réalisée par l'interposition d'un tube tournant entre le caisson de l'atterrisseur articulé à la structure de l'avion et la tige coulissante montée pour coulisser dans le caisson et supportant les roues.

Lorsque l'atterrisseur est en position d'utilisation, le tube tournant est verrouillé par rapport au caisson et l'orientation des roues est maintenue constante au moyen d'un compas ayant une branche supérieure fixée de façon articulée au tube tournant et une branche inférieure fixée de façon articulée à la tige coulissante. Il existe des dispositifs à tube tournant ayant un fonctionnement satisfaisant. Toutefois, le tube tournant augmente de façon non négligeable le poids de l'atterrisseur et constitue donc un handicap.

Un but de la présente invention est de réaliser un atterrisseur comportant des moyens d'orientation des roues lors du relevage de l'atterrisseur tout en ayant une structure allégée par rapport aux atterrisseurs existants.

En vue de la réalisation de ce but, on prévoit selon l'invention un atterrisseur d'avion relevable comportant un caisson équipé de moyens d'articulation à une structure d'avion, des moyens de relevage du caisson, une tige coulissante montée pour coulisser dans le caisson et supportant un arbre de roue, et un compas comprenant une branche supérieure ayant une extrémité supérieure fixée de façon pivotante au caisson et une branche inférieure ayant une extrémité inférieure fixée de façon pivotante à la tige coulissante, cet atterrisseur comportant en outre des moyens articulés ayant une extrémité fixée de façon pivotante à une extrémité inférieure de la branche supérieure du compas et une extrémité opposée fixée de façon pivotante à une extrémité supérieure de la branche inférieure du compas, et des moyens de commande des moyens articulés entre une position repliée où l'extrémité inférieure de la branche supérieure du compas et l'extrémité supérieure de la branche inférieure du compas sont adjacentes, et une position déployée où l'extrémité inférieure de la branche supérieure du compas et l'extrémité supérieure de la branche inférieure du compas sont écartées l'une de l'autre.

Ainsi, par la manoeuvre des moyens articulés, on écarte ou on rapproche l'une de l'autre l'extrémité inférieure de la branche supérieure du compas et l'extrémité supérieure de la branche inférieure du compas et l'on exerce ainsi sur la tige coulissante un couple qui modifie son orientation et l'orientation des roues qui lui sont associées sans qu'il soit nécessaire de prévoir un tube tournant entre le caisson et la tige coulissante.

Selon une version avantageuse de l'invention, les moyens articulés comprennent une bielle ayant une première extrémité fixée à l'extrémité supérieure de la branche inférieure du compas et un levier ayant une première extrémité reliée à l'extrémité inférieure de la branche supérieure du compas, la bielle et le levier ayant des secondes extrémités reliées l'une à l'autre et les moyens de commande étant associés de façon articulée au levier.

De préférence, les moyens de commande comprennent un guignol monté de façon pivotante sur la branche supérieure du compas et ayant une première extrémité reliée au levier par l'intermédiaire d'une bielle de liaison et une seconde extrémité reliée à une bielle télescopique élastique, cette bielle élastique étant équipée de moyens de fixation à la structure de l'avion disposés de façon à maintenir la bielle élastique en traction pour une position abaissée de l'atterrisseur et la mettre en compression lors d'un relevage de l'atterrisseur. Ainsi, lors du relevage de l'atterrisseur, la mise en compression de la bielle télescopique fait pivoter le guignol qui repousse à son tour le levier articulé pour provoquer un déploiement des moyens articulés.

Selon un mode de réalisation préféré de l'invention, le guignol est relié à la bielle télescopique par un axe d'articulation coaxial avec un axe d'articulation de l'extrémité supérieure de la branche supérieure du compas sur le caisson. Ainsi, le guignol reste neutre par rapport aux moyens articulés lors de l'atterrissage et du roulage au sol de l'avion.

Selon un autre aspect préféré de l'invention, la bielle comporte une cavité dans laquelle un axe d'articulation du levier avec la branche supérieure du compas vient se loger pour une position repliée de la bielle et du levier de façon que cet axe d'articulation soit aligné avec des axes d'articulation de la bielle avec le levier et avec la branche inférieure du compas. Ainsi, la bielle et le levier restent de façon stable en position repliée.

D'autres caractéristiques et avantages de l'invention apparaîtront à la lecture de la description qui suit d'un exemple de réalisation particulier non limitatif de l'invention en liaison avec les dessins ci-joints parmi lesquels :

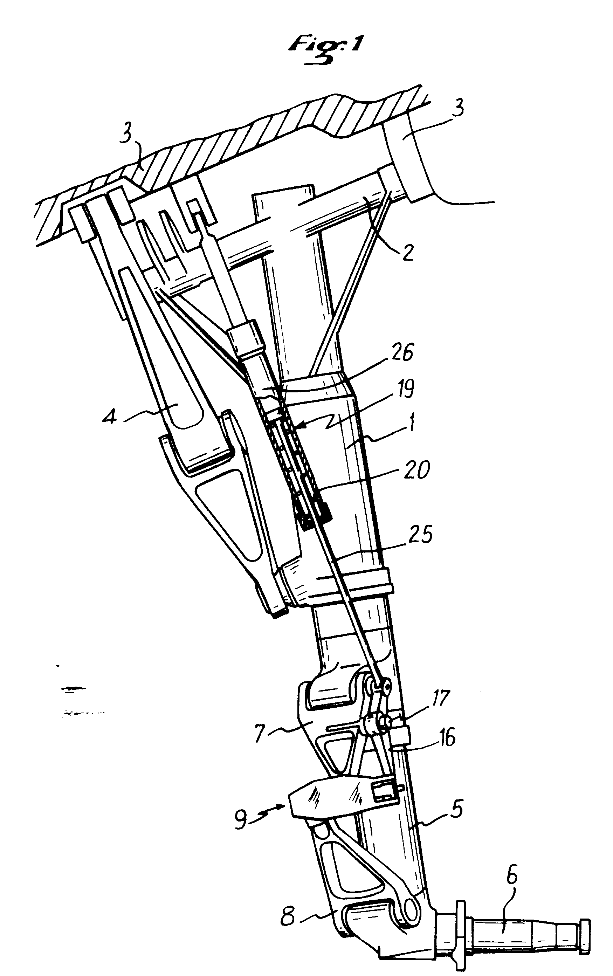

– la figure 1 est une vue en perspective, partiellement en coupe d'un atterrisseur selon l'invention.

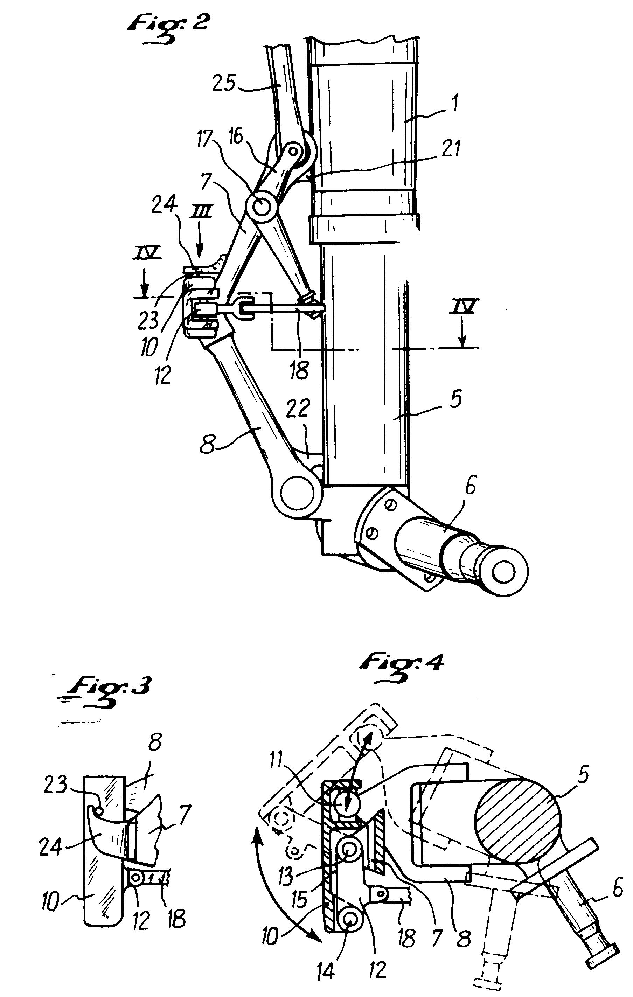

– la figure 2 est une vue de côté partielle agrandie de l'atterrisseur selon l'invention.

– la figure 3 est une vue partielle selon la flèche III de la figure 2.

– la figure 4 est une vue partielle en coupe selon la ligne IV-IV de la figure 2.

En référence aux figures, l'atterrisseur selon l'invention comporte de façon classique un caisson 1 équipé d'un axe d'articulation 2 à une structure d'avion 3. Le caisson 1 est également relié à la structure d'avion 3 par un moyen de contreventement 4 manoeuvré par un vérin de relevage non représenté. De façon classique, l'atterrisseur comporte également une tige coulissante 5 montée pour coulisser dans le caisson 1 et supportant un arbre de roue 6, et un compas comprenant une branche supérieure 7 ayant une extrémité supérieure fixée de façon pivotante au caisson 1 et une branche inférieure 8 ayant une extrémité inférieure fixée de façon pivotante à la tige coulissante 5 autour d'axes horizontaux.

Selon l'invention, la branche supérieure 7 du compas et la branche inférieure 8 du compas ne sont pas directement reliées l'une à l'autre mais sont reliées par l'intermédiaire de moyens articulés généralement désignés en 9. Dans le mode de réalisation préféré illustré, les moyens articulés 9 comprennent une bielle 10 ayant une première extrémité fixée de façon pivotante à l'extrémité supérieure de la branche inférieure 8 du compas par une liaison à rotule 11, et un levier 12 ayant une première extrémité fixée de façon articulée à l'extrémité inférieure de la branche supérieure 7 du compas autour d'un axe d'articulation 13. La bielle 10 et le levier 12 ont par ailleurs des secondes extrémités reliées l'une à l'autre de façon pivotante autour d'un axe d'articulation 14. La bielle 10 comporte une cavité 15 dans laquelle vient se loger le levier 12 en position repliée de sorte que dans cette position repliée, représentée en trait continu sur la figure 4, les axes d'articulation 11, 13 et 14 sont alignés.

La position des moyens articulés 9 est déterminée par des moyens de commande comprenant un guignol 16 monté de façon pivotante sur un axe d'articulation horizontal 17 fixé à la branche supérieure 7 du compas, parallèlement à l'axe d'articulation de la branche 7 sur le caisson. L'extrémité inférieure du guignol 16 est reliée par une liaison à rotule à une bielle de liaison 18 qui est par ailleurs reliée de façon articulée au levier 12. L'extrémité supérieure du guignol 16 est reliée de façon articulée à la tige 25 d'une bielle télescopique 19 dont le boîtier 26 est relié de façon articulée à la structure 3 de l'avion en un point de celle-ci décalé par rapport à l'axe d'articulation du caisson 1 sur cette même structure. La bielle télescopique 19 contient également un organe élastique, par exemple un ressort 20 disposé de façon à maintenir la bielle télescopique élastique en traction pour une position abaissée de l'atterrisseur. De préférence, l'axe d'articulation de l'extrémité supérieure du guignol 16 avec la bielle télescopique 19 est coaxial avec l'axe d'articulation de l'extrémité supérieure de la branche supérieure 7 du compas avec le caisson 1.

Dans le mode de réalisation préféré illustré, la branche supérieure 7 du compas comporte en outre une butée 21 qui vient en appui contre le caisson 1 pour une position détendue de l'atterrisseur et la branche inférieure 8 du compas comporte une butée 22 qui vient en appui contre la tige coulissante 5 pour une position détendue de l'atterrisseur. Un ergot de verrouillage 23 est en outre prévu sur la bielle 10 et est disposé de façon appropriée sur celle-ci pour venir en butée contre une came de verrouillage 24 portée par la branche supérieure 7 du compas lorsque la bielle et le levier sont en position repliée. Le fonctionnement de l'atterrisseur selon l'invention est le suivant: lorsque l'atterrisseur est abaissé en position d'utilisation, la bielle télescopique 19 est en traction et rappelle la bielle 10 et le levier 12 vers leur position repliée dans laquelle ils s'étendent selon une direction sensiblement horizontale, et sont verrouillés par l'appui de l'ergot 23 sur la came 24. Lorsque l'avion atterrit ou roule au sol, la branche supérieure 7 du compas peut pivoter autour de son axe d'articulation au caisson et la branche inférieure 8 du compas peut pivoter autour de son axe d'articulation à la tige coulissante. L'extrémité inférieure de la branche supérieure 7 et l'extrémité supérieure de la branche inférieure 8 sont maintenues adjacentes et peuvent pivoter l'une par rapport à l'autre autour d'un axe horizontal par pivotement de la bielle 10 sur la rotule 11. Lors des mouvements d'enfoncement ou d'extension de la tige coulissante 5, le guignol 16 reste neutre par rapport à la branche supérieure 7 du compas. La bielle 10 et le levier 12 restent donc en position repliée tant en raison de la traction exercée par la bielle télescopique 19 que par l'effet de verrouillage résultant de l'ergot 23 et de la came 24.

Lorsque l'avion est en vol, la butée 21 de la branche supérieure 7 du compas vient en appui contre le caisson 1 et la butée 22 de la branche inférieure 8 du compas vient en appui contre la tige coulissante 5 de sorte que la position relative de la branche supérieure et de la branche inférieure du compas est parfaitement définie. Lorsque l'atterrisseur est relevé, la bielle 10 et le levier 12 restent en position repliée tant que la bielle télescopique 19 reste en traction sous l'effet du ressort 20. Toutefois, lorsque la tige 25 de la bielle télescopique 19 atteint le fond du boîtier 26, la bielle télescopique 19 est mise en compression et repousse l'extrémité supérieure du guignol 16. Le guignol 16 pivote alors autour de son axe 17 et repousse à son tour le levier 12 qu'il force à pivoter, provoquant ainsi un déploiement de la bielle 10 et du levier 12 et donc un écartement progressif de l'extrémité supérieure de la branche inférieure 8 du compas par rapport à l'extrémité inférieure de la branche supérieure 7 du compas jusqu'à une position représentée en trait pointillé fin sur la figure 4. Dans le mouvement d'écartement de l'extrémité supérieure de la branche inférieure du compas par rapport à l'extrémité inférieure de la branche supérieure du compas, la tige coulissante est entraînée en rotation et modifie donc l'orientation de l'arbre de roue 6.

Bien entendu l'invention n'est pas limitée au mode de réalisation décrit et on peut y apporter des variantes de réalisation sans sortir du cadre de l'invention. En particulier, bien que dans le mode de réalisation représenté, la bielle 10 enveloppe totalement le levier 12 en position repliée, on peut prévoir une bielle 10 simplement incurvée afin que le levier 12 puisse se loger sur le côté concave de la bielle assimilable à une cavité. De même, bien qu'une liaison à rotule 11 ait été prévue entre la bielle et l'extrémité supérieure de la branche inférieure du compas, on peut prévoir de placer cette rotule entre l'extrémité inférieure de la branche supérieure du compas et l'extrémité du levier ou encore prévoir une liaison de cardan entre les moyens articulés 9 et l'une des branches du compas. Le mécanisme de commande comportant un guignol et une bielle télescopique peut également être remplacé par un vérin hydraulique ou pneumatique ayant une extrémité reliée de façon articulée au caisson et une extrémité reliée de façon articulée au levier 12.

Dans le cas où l'on utilise un guignol, l'axe de pivotement de celui-ci peut avoir une orientation différente de l'axe d'articulation de la branche supérieure 7 au caisson.

## Revendications

1. Atterrisseur d'avion relevable comportant un caisson (1) équipé de moyens d'articulation à une structure d'avion, des moyens de relevage (4) du caisson, une tige coulissante (5) montée pour coulisser dans le caisson et supportant un arbre de roue (6), et un compas comprenant une branche supérieure (7) ayant une extrémité supérieure fixée de façon pivotante au caisson (1) et une branche inférieure (8) ayant une extrémité inférieure fixée de façon pivotante à la tige coulissante (5) caractérisé en ce que la branche supérieure (7) et la branche inférieure (8) du compas sont reliées par des moyens articulés (9) ayant une extrémité fixée de façon pivotante à une extrémité inférieure de la branche supérieure (7) du compas, et une extrémité opposée fixée de façon pivotante à une extrémité supérieure de la branche inférieure (8) du compas, et des moyens de commande (16, 18, 19) des moyens articulés entre une position repliée où l'extrémité inférieure de la branche supérieure du compas et l'extrémité supérieure de la branche inférieure du compas sont adjacentes, et une position déployée où l'extrémité inférieure de la branche supérieure du compas et l'extrémité supérieure de la branche inférieure du compas sont écartées l'une de l'autre.

2. Atterrisseur d'avion selon la revendication 1, caractérisé en ce que les moyens articulés (9) comprennent une bielle (10) ayant une première extrémité reliée à l'extrémité supérieure de la branche inférieure du compas, et un levier (12) ayant une première extrémité reliée à l'extrémité inférieure de la branche supérieure du compas, la bielle et le levier ayant des secondes extrémités reliées l'une à l'autre, et les moyens de commande étant associés de façon articulée au levier (12).

3. Atterrisseur d'avion selon la revendication 2, caractérisé en ce que les moyens de commande comprennent un guignol (16) monté de façon pivotante sur la branche supérieure (7) du compas et ayant une première extrémité reliée au levier (12) par l'intermédiaire d'une bielle de liaison (18) et une seconde extrémité reliée à une bielle télescopique élastique (19), cette bielle élastique (19) étant équipée de moyens de fixation à la structure de l'avion disposés de façon à maintenir la bielle élastique en traction pour une position abaissée de l'atterrisseur et la mettre en compression lors d'un relevage de l'atterrisseur.

4. Atterrisseur d'avion selon la revendication 3, caractérisé en ce que le guignol (16) est relié à la bielle télescopique (19) par un axe d'articulation coaxial avec un axe d'articulation de l'extrémité supérieure (7) de la branche supérieure du compas sur le caisson.

5. Atterrisseur d'avion selon l'une des revendications 2 à 4, caractérisé en ce que la bielle (10) comporte une cavité (15) dans laquelle un axe d'articulation (13) du levier (12) avec la branche supérieure (7) du compas vient se loger pour une position repliée de la bielle et du levier de façon que cet axe d'articulation (13) soit aligné avec les axes d'articulation (11, 14) de la bielle avec le levier et avec la branche inférieure du compas.

6. Atterrisseur d'avion selon l'une des revendications 2 à 5, caractérisé en ce que la bielle (10) est reliée à la branche inférieure (8) du compas par une liaison à rotule (11).

7. Atterrisseur d'avion selon la revendication 6, caractérisé en ce que la bielle (10) comporte un ergot de verrouillage (23) qui, en position repliée de la bielle et du levier (12), vient en butée contre une came de verrouillage (24) portée par la branche supérieure (7) du compas.

8. Atterrisseur d'avion selon l'une des revendications 2 à 7, caractérisé en ce que la branche supérieure et la branche inférieure du compas comportent des butées (21, 22) venant respectivement en contact avec le caisson (1) et avec la tige coulissante (5) pour une position détendue de l'atterrisseur.

## Patentansprüche

1. Einziehbares Flugzeugfahrwerk, umfassend eine mit Mitteln für eine gelenkige Lagerung an einer Flugzeugstruktur ausgestatteten Aufnahmehülse (1), Mittel (4) zum Einziehen der Aufnahmehülse, eine Schiebestrebe (5), die in dem Aufnahmezylinder verschiebbar gelagert ist und eine Radachse (6) trägt, und eine Drehübertragungsschere mit einem oberen Arm (7), dessen oberes Ende schwenkbar an der Aufnahmehülse (1) gelagert ist, sowie mit einem unteren Arm (8), dessen unteres Ende schwenkbar an der Schiebestrebe (5) gelagert ist, dadurch gekennzeichnet, daß der obere Arm (7) und der untere Arm (8) der Schere über eine Gelenkanordnung (9) miteinander verbunden sind, deren eines Ende schwenkbar an einem unteren Ende des oberen Armes (7) der Schere befestigt ist und deren davon abgewandtes Ende schwenkbar an einem oberen Ende des unteren Armes (8) der Schere befestigt ist, und daß Mittel (16, 18, 19) vorgesehen sind zum Verstellen der Gelenkanordnung zwischen einer zusammengefalteten Stellung, bei der das untere Ende des oberen Armes der Schere und das obere Ende des unteren Armes der Schere beieinander liegen, sowie einer auseinandergefalteten Stellung, bei der das untere Ende des oberen Armes der Schere und das obere Ende des unteren Armes der Schere einen Abstand voneinander haben.

2. Flugzeugfahrwerk nach Anspruch 1, dadurch gekennzeichnet, daß die Gelenkanordnung (9) ein Koppelglied (10) umfaßt, dessen erstes Ende mit dem oberen Ende des unteren Armes der Schere verbunden ist, sowie einen Hebel (12), dessen erstes Ende mit dem unteren Ende des oberen Armes der Schere verbunden ist, wobei das jeweilige zweite Ende des Koppelgliedes und des Hebels miteinander verbunden sind, sowie umfassend Verstellmittel, die gelenkig an dem Hebel (12) angeschlossen sind.

3. Flugzeugfahrwerk nach Anspruch 2, dadurch gekennzeichnet, daß die Verstellmittel einen Umlenkhebel (16) umfassen, welcher schwenkbar an dem oberen Arm (7) der Schere angeordnet ist und von welchem ein erstes Ende mit dem Hebel (12) über ein Verbindungskoppelglied (18) sowie ein zweites Ende mit einer elastischen, teleskopischen Strebe (19) verbunden ist, wobei die elastische Strebe (19) mit Mitteln für eine Befestigung an der Struktur des Flugzeuges versehen ist, die so angeordnet sind, daß die elastische Strebe bei einer ausgefahrenen Stellung des Fahrwerkes auf Zugspannung gehalten und beim Einziehen des Fahrwerkes unter eine Kompressionsspannung gesetzt wird.

4. Flugzeugfahrwerk nach Anspruch 3, dadurch gekennzeichnet, daß der Umlenkhebel (16) mit der teleskopischen Strebe (19) über eine Gelenkachse verbunden ist, die koaxial zu einer Achse für die Gelenkverbindung des oberen Endes (7) des oberen Armes der Schere mit der Aufnahmehülse ist.

5. Flugzeugfahrwerk nach einem der Ansprüche 2 bis 4, dadurch gekennzeichnet, daß das Koppelglied (10) eine Ausnehmung (15) hat, in die sich eine Achse (13) für die Gelenkverbindung des Hebels (12) mit dem oberen Arm (7) der Schere bei einer zusammengefalteten Stellung des Koppelgliedes und des Hebels hineinlegt, derart, daß die Achse (13) für diese Gelenkverbindung mit den Achsen (11, 14) für die Gelenkverbindung des Koppelgliedes mit dem Hebel bzw. mit dem unteren Arm der Schere fluchtet.

6. Flugzeugfahrwerk nach einem der Ansprüche 2 bis 5, dadurch gekennzeichnet, daß das Koppelglied (10) mit dem unteren Arm (8) der Schere über eine Kugelgelenkverbindung (11) verbunden ist.

7. Flugzeugfahrwerk nach Anspruch 6, dadurch gekennzeichnet, daß das Koppelglied (10) einen Verriegelungsvorsprung (21) aufweist, welcher bei einer zusammengefalteten Stellung des Koppelgliedes und des Hebels (12) zum Anschlag gegen einen Verriegelungsnocken (24) kommt, welcher am oberen Arm (7) der Schere angeordnet ist.

8. Flugzeugfahrwerk nach einem der Ansprüche 2 bis 7, dadurch gekennzeichnet, daß der obere Arm und der untere Arm der Schere Anschläge (21, 22) aufweisen, die jeweils mit der Aufnahmehülse (1) bzw. der Schiebestrebe (5) bei einer entspannten Stellung des Fahrwerkes in Kontakt kommen.

## Claims

1. Retractable aircraft landing gear comprising a strut (1) fitted with means for pivoting it to the structure of an aircraft, means (4) for raising the strut, a sliding rod (5) mounted to slide within the strut and supporting a wheel axle (6), and a scissors linkage comprising a top branch (7) having a top end pivoted to the strut (1) and a bottom branch (8) having a bottom end pivoted to the sliding rod (5), the landing gear being characterized in that the top branch (7) and the bottom branch (8) are linked by articulated means (9) having one end pivoted to a bottom end of the top branch (7) of the scissors linkage, and an opposite end pivoted to a top end of the bottom branch (8) of the scissors linkage, and control means (16, 18, 19) for controlling the articulated means to move between a folded position in which the bottom end of the top branch of the scissors linkage and the top end of the bottom branch of the linkage are adjacent, and an unfolded position in which the bottom end of the top branch of the scissors linkage and the top end of the bottom branch of the the linkage are spaced apart from each other.

2. Aircraft landing gear according to claim 1, characterized in that the articulated means (9) comprise an articulated link (10) having a first end connected to the top end of the bottom branch of the scissors linkage, and an articulated lever (12) having a first end connected to the bottom end of the top branch of the linkage, the link and the lever having second ends which are connected to each other, and the control means being associated in hinged manner with the lever (12).

3. Aircraft landing gear according to claim 2, characterized in that the control means comprise a crank (16) pivotally mounted on the top branch (7) of the scissors linkage and having a first end connected to the articulated lever (12) via a tie link (18) and a second end connected to a resilient telescopic link (19), said resilient link (19) being fitted with means for fixing it to the structure of the aircraft and disposed in such a manner as to keep the resilient link in traction when the landing gear is extended, and to put it into compression when the landing gear is retracted.

4. Aircraft landing gear according to claim 3, characterized in that the crank (16) is connected to the telescopic link (19) by a pivot which is coaxial with the pivot axis between the top strut and the top end (7) of the top branch of the scissors linkage.

5. Aircraft landing gear according to any one of claims 2 to 4, characterized in that the articulated link (10) includes a cavity (15) in which the pivot (13) between the lever (12) and the top branch (7) of the scissors linkage is received when the link and the lever are in a folded position such that said pivot (13) and the pivots (11, 14) between the link and the lever and between the link and the bottom branch of the scissors linkage are in side-by-side alignment.

6. Aircraft landing gear according to any one of claims 2 to 5, characterized in that the articulated link (10) is connected to the bottom branch (8) of the scissors linkage by a ball-and-socket connection (11).

7. Aircraft landing gear according to claim 6, characterized in that the articulated link (10) includes a locking stud (23) which, in the folded position of the link and the lever (12), comes into abutment against the locking cam (24) carried by the top branch (7) of the scissors linkage.

8. Aircraft landing gear according to any one of claims 2 to 7, characterized in that the top branch and the bottom branch of the scissors linkage include abutments (21, 22) respectively making contact with the strut (1) and with the sliding rod (5) in the fully-extended position of the landing gear.

Fig. 1

Fig. 2

Fig. 3

Fig. 4